# EUROPEAN PATENT SPECIFICATION

(11) **EP 3 535 147 B1**
(45) Date of publication and mention of the grant of the patent: **30.12.2020**
(21) Application number: 17793676.2
(22) Date of filing: 07.11.2017
(51) Int. Cl.: B60H 3/06, B60H 1/00, B60S 1/46, B01D 46/00, B01D 65/10, G01N 15/08

(54) **PROCESS OF OPERATING THE AIR CONDITIONING SYSTEM OF A CAB OF A VEHICLE**
VERFAHREN ZUM BETRIEB DES KLIMAANLAGENSYSTEMS EINES FÜHRERHAUSES EINES FAHRZEUGS
PROCÉDÉ D'OPÉRATION DU SYSTÈME DE CONDITIONNEMENT D'AIR D'UNE CABINE D'UN VÉHICULE

(30) Priority: 07.11.2016 EP 16306456
(43) Date of publication of application: 11.09.2019
(73) Proprietor: CNH Industrial France S.A.S., 91150 Morigny-Champigny (FR)
(72) Inventor: GUERINEAU, Christophe, 85620 Rocheservière (FR)
(74) Representative: CNH Industrial IP Department
(86) International application number: PCT/EP2017/078496
(87) International publication number: WO 2018/083348

(56) References cited:
- WO-A1-2016/005406
- DE-A1-102013 218 537
- DE-U1- 9 312 523
- GB-A- 2 362 841
- US-A1- 2004 065 204
- "15695-1:2010-05: Landwirtschaftliche Traktoren und selbstfahrende Pflanzenschutzgeraete - Schutz der Bedienungsperson (Fahrer) vor gefaehrlichen Substanzen - Teil 1", DIN NORM, BEUTH, DE, vol. 15695-1:2010-05, 1 May 2010 (2010-05-01), pages 1-32, XP008184188,
- "15695-2:2010-07: Landwirtschaftliche Traktoren und selbstfahrende Pflanzenschutzgeräte - Schutz der Bedienungsperson (Fahrer) vor gefährlichen Substanzen - Teil 2: Filter, Anforderungen und Prüfverfahren", DIN NORM, BEUTH, DE, vol. 15695-2:2010-07, 1 July 2010 (2010-07-01), pages 1-11, XP008184187,

## Description

The invention relates to a process of operating the air conditioning system of a cab of a vehicle, and a vehicle, in particular an agricultural machine, comprising a cab equipped with an air conditioning system which is adapted to be operated according to such a process.

It applies in particular to the technical domain of mechanical spreading of treatment products, such as phytosanitary products, insecticides or fertilizers, on the harvest plants and/or the plowed soil of an agricultural field, such as a vineyard or an orchard.

To do so, land agricultural machines are known, comprising a motorized support structure which is equipped with a driver station and movable in particular along rows of plants and/or furrows of an agricultural field, a spreading unit being mounted on said structure for straddling at least one of said rows and spreading determined measures of at least one treatment product on said rows.

In particular, such machines are driven by a human operator seating in a closed cab of the driver station for actuating the commands means for moving said machine and/or operating the spreading unit.

Treatment products used in the agricultural domain are generally harmful for the health. In particular, during spreading operations, a quantity of such products may diffuse in the air, in particular in the form of dusts, aerosols and/or vapours, and form air pollutants which, if there are inhaled by the operator, in particular repeatedly, may cause in the long term serious and invalidating professional pulmonary and/or respiratory diseases.

For limiting the risks of exposure of the operator to such air pollutants, cabs are generally equipped with air conditioning systems that are adapted to condition the air circulating in said cabs, in particular by feeding said cabs with air that is mainly free from such pollutants.

Such air-conditioning systems are, e.g., known from the German patent application published as DE 10 2013 218 537 A1, which discloses an agricultural vehicle comprising:
- a circuit for supplying the cab with air coming at least partially from the exterior of said cab;
- a blowing device for blowing an air flow inside said circuit;
- filtration means for removing pollutants from the air blown into the cab through said circuit.

Besides, such air-conditioning systems may comply with strict regulatory texts, such as the European standard EN-15695, in particular as regards the flow rate of the air flow, the air pressurization inside the cab and the quality of the filtration means. For example, this standard defines four levelling categories for the security provided to the operator, from a minimal security level (category 1) wherein the health risks are minimal, in particular when the machine is driven on a road, to a maximal security level (category 4), wherein said machine is driven on a field to spray highly polluting products.

In particular, the filtration means, especially the category 4 filtration means, have limited lifetime, and must be regularly replaced for ensuring the safety of the operators.

To do so, the filtrations means are generally replaced after a determined number of hours and/or times of using the machine, said using periods being determined for example according to an average lifetime evaluated during efficiency tests that were performed during the manufacturing of said filtration means.

However, this solution is not totally satisfactory, as it implies the changing of filtration means according to a generic criterion which does not take into account the real saturation state of said filtration means. Thus, some filtration means are automatically changed after the expiry of a generic using period whereas they can still function efficiently, which triggers money losses due to waste.

To try to avoid such a drawback, some solutions have been proposed, for detecting the possible presence of air pollutants within the cab during the operating of the air conditioning system, such a presence being a certain clue of the saturation of the filtration means.

However, such solutions are not satisfactory either, as there are a lot of different spreading products that are used in the agricultural domain, so that the detection of all of said products would be very complex to perform. Moreover, as they rely on the presence of air pollutants to be filtered within the cab, these solutions implies the exposure of the operator to said pollutants, which is not desirable.

The invention aims to improve the prior art by proposing a process of operating the air conditioning system of a cab which allows to protect more efficiently the operator from air pollutants diffused around said cab, in particular by monitoring with more accuracy the efficiency of the filtration means.

For that purpose, and according to a first aspect, the invention relates to a process of operating the air conditioning system of a cab of a vehicle, the cab being equipped with a reservoir of windshield washer fluid, said air-conditioning system comprising:
- a circuit for supplying said cab with air coming at least partially from the exterior of said cab;
- a blowing device for blowing an air flow inside said circuit;
- filtration means for removing pollutants from the air blown into the cab through said circuit;
- a spraying device operable to spray a quantity of the windshield washer fluid from said reservoir upstream of the filtration means

said process comprising:
- a regular procedure wherein the air-conditioning system is operated to blow the air supplied by said circuit into the cab,
said process comprising a test of the efficiency of the filtration means, wherein said test provides for:
- operating the spraying device for spraying said quantity of the windshield washer fluid from said reservoir into the circuit upstream of the filtration means whilst the blowing device is operated to blow an air flow inside the circuit;
- monitoring the air flow supplied by the circuit at a location downstream of the filtration means for detection of the possible presence of the sprayed windshield washer fluid by means of at least one appropriate sensor provided at said downstream location; and
- providing by means of said at least one sensor a signal representative of the efficiency of said filtration means upon the detection of such a presence.

According to a second aspect, the invention relates to a vehicle, in particular an agricultural machine, comprising a cab equipped with an air-conditioning system which is configured to be operated by such a process.

Other aspects and advantages of the invention will become apparent in the following description made with reference to the appended figures, wherein:
- figures 1 represent schematically a cab of a vehicle according to an aspect of the invention, respectively in perspective front view (figure 1a), in perspective rear view without the upper cover of the air conditioning system (figure 1b), and in a side view without said upper cover (figure 1c);
- figure 2 represents in an exploded view the pressurization set of the air conditioning system equipping the cab of figures 1, with means for switching between first and second filtration modes;
- figures 3 represent schematically in a top view the operation of the air-conditioning system of figures 1, 2 during the regular procedure, said air-conditioning system being arranged respectively in a first (figure 3a) and in a second (figure 3b) filtration modes;

- figure 4a represents schematically the steps of the procedure for switching the air conditioning system between the first and second filtration modes, figure 4b representing schematically a pressurization set with switching means;
- figure 5 represents schematically the steps of a process according to the invention.

In relation to those figures, we describe below a vehicle comprising a cab equipped with an air conditioning system.

The vehicle is in particular an agricultural machine arranged for the mechanical spreading of treatment products, such as phytosanitary products, insecticides or fertilizers, on the crop plants and/or the plowed soil of an agricultural field, such as a vineyard or an orchard.

To do so, the machine comprising a motorized support structure which is equipped with a driver station and movable in particular along rows of plants and/or furrows of an agricultural field, a spreading unit being mounted on said structure for straddling at least one of said rows and spreading determined quantities of at least one treatment product on said rows.

In particular, the spreading unit can be mounted on the support structure permanently or removably, so as to be replaceable by other equipment and accessories, for example harvesting equipment, pruning equipment or equipment for working the soil.

The machine is in particular adapted to be driven by a human operator. To do so, the driver station comprises a closed cab 1 wherein the operator is intended to seat for actuating the commands means for moving said machine and/or operating the spreading unit.

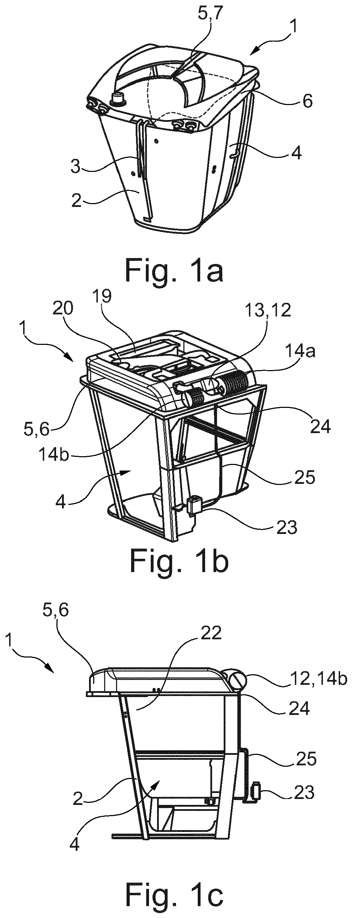

In relation to figure 1, the cab 1 comprises a front windshield 2 made from a substantially transparent and solid material, for example laminated glass, for protecting the operator from wind and/or rain while ensuring a good visibility to allow said operator to drive safely the machine, as well as a device 3 for automatically washing said windshield, in particular with an appropriate product, for removing dirt that can potentially hinder said visibility .Moreover, the cab 1 comprises at least one operator access, in particular a lateral access door 4, for allowing the operator to come into and out of the cab 1.

Treatment products used in the agricultural domain are generally harmful for the health. In particular, during spreading operations, a quantity of such products may diffuse in the air, in particular in the form of dusts, aerosols and/or vapors, and form air pollutants which, if there are inhaled by the operator, in particular repeatedly, may cause in the long term serious and invalidating professional pulmonary and/or respiratory diseases.

For limiting the risks of exposure of the operator to such air pollutants, the cab 1 is equipped with an air conditioning system 5 that is adapted to condition the air circulating in said cab, in particular by feeding said cab with air that is mainly free from such pollutants.

In relation to the figures, the air conditioning system 5 is implemented in the roof of the cab 1, in particular into a sealed compartment 6 which is fixed, for example by gluing, to said roof, and which is accessible from the exterior of the cab 1 by means of an upper removable maintenance cover 7. In particular, the maintenance cover 7 may comprise a peripheral edge which is equipped with a sealing gasket 8, so as to ensure the sealed closing of the compartment 6.

In a known manner, the air conditioning system 5 comprises components and control means, for example a control circuit board, for allowing the operating of said system, in particular upon communication with command means implemented within the cab 1, according to a predetermined process, such as:
- a circuit 9 which supplies the cab 1 with air coming from a recycling branch 9a fed with air coming from said cab and an exterior branch 9b fed with air coming from the exterior of said cab;
- a blowing device 10 for blowing an air flow inside said circuit;
- filtration means 11 for removing pollutants from the air blown into the cab through said circuit.

In relation to the figures, the air conditioning system 5 comprises a pressurization set 12 which is arranged upstream of the circuit 9, said set comprising a central housing 13, wherein the blowing device 10 is arranged, and two lateral housings 14a, 14b, wherein respectively a first 11a and a second 11b filtration means are arranged.

The lateral housings 14a, 14b are in fluid communication with the exterior of the cab 1, so as to allow circulation through said housings of air coming from said exterior and to remove pollutants from said exterior air by means of the filtration means 11a, 11b arranged within said housings.

Moreover, the central housing 13 is in fluid communication with the interior of the cab 1, so as to allow the blowing into the recycling branch 9a of a recycled air flow F_{R} coming from said cab, as well as with the lateral housings 14a, 14b, so as to allow the blowing into the exterior branch 9b of an exterior air flow F_{E} that has been filtered by at least one filtration means 11a, 11b.

The filtration means 11, 11a, 11b may be adapted to remove pollutants in accordance with the requirements of at least the category 2 defined by standard EN-15695, so as to be able to remove at least dust pollutants from the air flow to be blown in the cab 1, and more particularly with the requirements of the maximal category 4 of said standard, so as to be able to remove not only dusts, but also aerosol and vapor pollutants from said airflow.

In the embodiment shown, the air conditioning system 5 comprises first 11a and second 11b filtration means that comply with the requirements of respectively the categories 2 and 4 of the standard EN-15695, said filtration means being made for example respectively from paper and from charcoal.

Further, the air conditioning system 5 comprises means for selectively switching between two filtration modes corresponding respectively to category 2 and 4 filtration levels, wherein the filtrations means 11a, 11b are selectively put in fluid communication with the blowing device 10 according to the desired level of filtration.

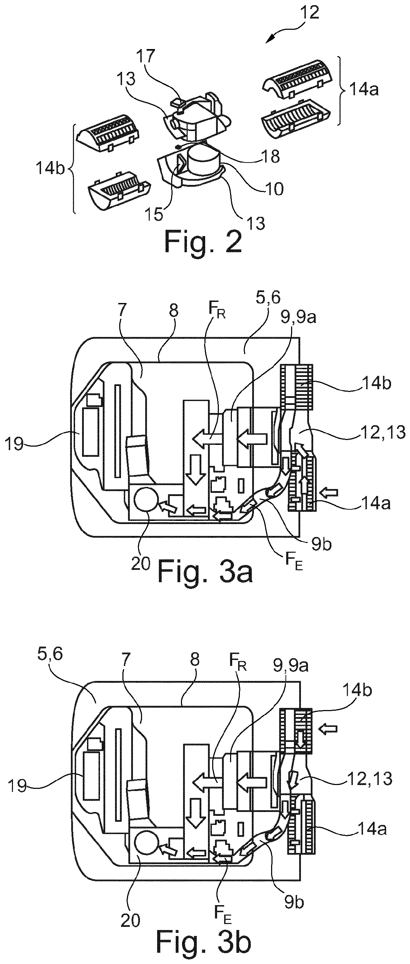

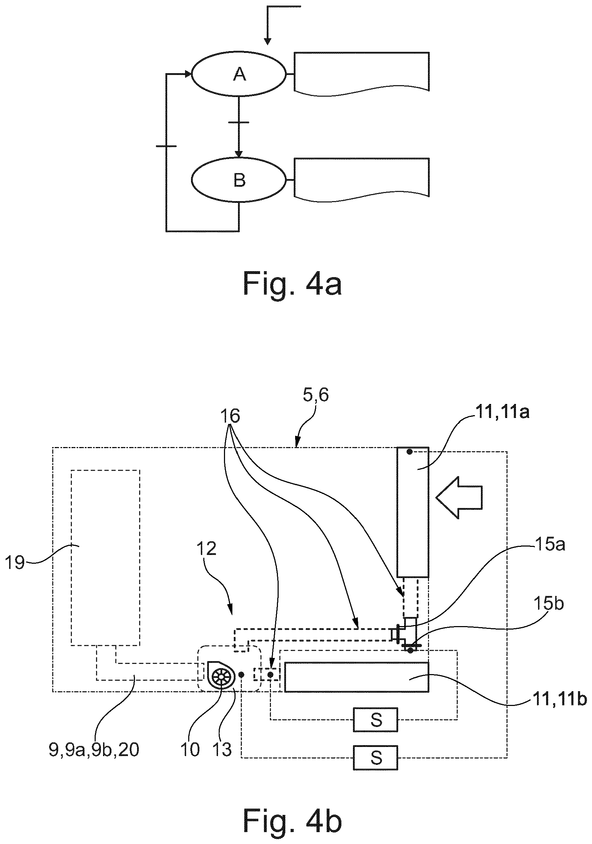

In relation with figures 2 and 4b, the switching means comprise at least a filter selection valve 15 (figure 2), and in particular two selection valves 15a, 15b and appropriate control captors S (figure 4b), arranged in fluid communication paths 16 relying the central housing 13 and respectively first category 2 14a and second category 4 14b filtering housings, said valve(s) being arranged to be selectively actuated, in particular by means of an actuator 17 to which said valve is linked through a connector 18 (figure 2), respectively in category 2 and 4 filtration modes, wherein said valve(s) close(s) - respectively open(s) - the fluid communication between the category 4 filtration housing 14b and the central blowing housing 13 and open(s) - respectively close(s) - the fluid communication between the category 2 filtration housing 14a and said central housing.

Thus, in a particularly advantageous manner, the operator can benefit from a high level of filtration only when required, in particular only during the performing of a spreading operation in an agricultural field, and can switch to a lower level of filtration of category 2 when the risks of air pollution are lower, for example during a travel between an agricultural field and a vehicle garage. Such a configuration allows to limit the saturation of the category 4 filtration means 11b and to increase its lifetime, knowing that category 4 filters have generally a lifetime of approximately 300 hours, which is quite short in relation to the lifetime of approximately 1 year of the category 2 filters.

The air conditioning system 5 may further comprise additional filtration means that may be arranged at the fluid communication path between the interior of the cab 1 and the central housing 13, so as to remove possible air pollutants from the recycled air flow coming from said cab.

Moreover, the air conditioning system 5 comprises a HVAC device 19 (for Heating, Ventilation and Air Conditioning) which is arranged downstream of the circuit 9 for conditioning the air flow blown in the cab 1 through said circuit, said HVAC device comprising a feeding duct 20 into which both of the circuit branches 9a, 9b end for feeding said HVAC device with the air flow to be conditioned and blown into the cab 1.

In relation with the figures, we describe now a process of operating the air conditioning system 5.

In particular, the process comprises a filtration mode selection procedure wherein the switching means are operated to select one filtration mode, either upon manual activation of an appropriate means by the operator in the cab 1, for example a button or a switch on a control board within said cab, or upon automatic detection of an appropriate signal corresponding to the actuation state of the spreading unit.

More precisely, the filtration mode selection procedure provides two steps A, B wherein the switching means 15, 15a, 15b are put respectively in the category 2 and category 4 filtration mode. Moreover, the selection procedure provides the monitoring of appropriate signals, for example the manual actuation of a command means in the cab 1 or the possible actuation/deactivation of the spreading unit, and to perform switching from one step A, B to another, according to the results of said monitoring.

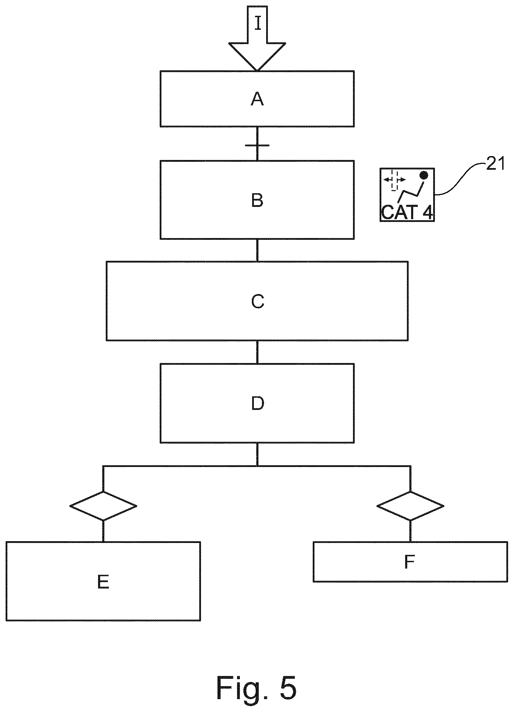

In an advantageous manner, the process can provide for performing the filtration mode selection procedure upon initial actuation I of the air conditioning system 5. In particular, as stated in figure 5, the category 2 mode selection step A is performed just after the initial actuation step I, so as to put by default the pressurization set 12 in the category 2 filtration mode.

Afterwards, the process provides for monitoring an appropriate signal as described above and for performing the category 4 mode selection step B upon the detection of such signal. In particular, the process can provide for informing the operator that the pressurization set 12 is in the category 4 filtration mode, in particular upon actuating an indicator lighting button 21 on the control board in the cab 1.

In relation to figures 3, the process comprises a regular air conditioning procedure wherein the air conditioning system 5 is operated to blow the air supplied by each of the recycling 9a and exterior 9b branches of the circuit 9 into the cab 1, and thus whatever the filtration mode selected.

In particular, the regular procedure can provide for operating the air conditioning system 5 to supply the cab 1 with a total flow of air comprising approximately 80% of a flow F_{R} of recycled air coming from the recycling branch 9a and approximately 20% of a flow F_{E} of exterior air coming from the exterior branch 9b.

Moreover, to comply with the requirements of at least the category 2 defined by standard EN-15695, the regular procedure can provide for operating the air conditioning system 5 so that the air flow F_{R}, F_{E} supplied in the cab 1 has a flow rate of at least 30m³/h with an overpressure in said cab of at least 20Pa.

In relation to figure 5, the process provides for performing the regular procedure upon initial actuation I of the air conditioning system 5, the steps A, B of the filtration mode selection procedure being performed during said regular procedure just after the initial actuation step I.

Thus, during the regular procedure, the cab 1 is regularly supplied with a flow of fresh air F_{R}, F_{E} coming from both of the inside and the exterior of the cab 1, said flow being previously filtered by appropriate filtration means 11, 11a, 11b, for removing pollutants generated in particular by the spreading product before being blown into said cab.

However, because of the ongoing uses, the filtration means 11a, 11b may be saturated with filtrated air pollutants, till they cannot filtrate anymore, which may threaten the safety of the operator. Thus, upon such a saturation, the filtration means 11a, 11b must be changed.

To detect such condition, the process comprises a test of the efficiency of the filtration means 11a, 11b, said test allowing to know in real time the real saturation state of said filtration means, and then to decide to replace or not said filtration means according to said state.

In particular, the test can be performed automatically upon activation of an appropriate means for selecting the filtration means 1a, 11b, and more particularly just after the filtering mode selection procedure, which allows for testing the efficiency of the filtration means 11a, 11b that has been selected upon said procedure. Moreover, the test can be performed before the actuation of the spreading unit of the machine, so as to avoid air pollution by the spreading product before said performance, and then to avoid exposure of the operator to said air pollution in case of a saturation of the selected filtration means 11a, 11b.

The test can be performed upon manual activation of an appropriate means by the operator in the cab 1, such as for example a button or a switch on the control board in said cab. Moreover, the regular procedure can also provide to perform automatically the test within said procedure at a predetermined time, in particular at periodical intervals of time, or after a predetermined time interval.

In relation to figure 5, the test provides at first a step C for spraying an identified fluid into the circuit 9 upstream of the filtration means 11a, 11b, and thus whilst the blowing device 10 is operated to blow air inside the circuit 9.

To do so, the air conditioning system 5 comprises a spraying device 24 for operable to spray the fluid which is provided upstream of the filtration means 11a, 11b, the providing for operating said spraying device, either upon manual activation of an appropriate means by the operator or automatically within the regular procedure.

According to a variant, the test can provide for a manual spraying of the identified fluid, for example by means of a hand bottle comprising a reservoir of such identified fluid and a device for manually spraying the fluid contained within said reservoir.

Once the identified fluid has been sprayed, the test proceeds to a step D for monitoring the air flow supplied by the circuit 9 at a location downstream of the filtration means 11a, 11b for detection of the possible presence of the sprayed fluid, and thus by means of at least one appropriate sensor provided at said downstream location.

In relation to figures 1, the detection of the possible presence of sprayed fluid can be performed at a location 22 within the cab 1, in particular near the roof of said cab. To this end, the cab 1 may comprise at least one appropriate sensor, such as for example a sensor adapted to detect Volatile Organic Compounds (VOC) and/or carbon dioxide (CO₂), said sensor being implemented near the location 22.

In particular, the identified fluid may present a limited toxicity, in particular by being not harmful to the respiratory and/or pulmonary health of the operator in the cab 1. Moreover, the identified fluid may be easily detectable by the sensor at the location 22, in particular by comprising at least Volatile Organic Compound(s) (VOC) and/or carbon dioxide (CO₂).

According to the invention, the identified fluid comprises a windshield washer fluid, said fluid being not only safe for the respiratory and/or pulmonary health of the operator, but also easily detectable by sensors as mentioned above, and readily available on the market due to its widespread use.

In relation to figures 1, the cab 1 is equipped with a reservoir 23 of windshield washer fluid, the test providing for spraying a quantity of fluid from said reservoir during the step C. In particular, the reservoir 23 is equipped with a pump which is connected to the spraying device 24 of the air conditioning system 5, for example through a tube 25, the test providing for operating said pump to feed said spraying device.

Once the step D for possible detection of sprayed identified fluid by the sensor has been performed, the test provides for providing, by means of said sensor, a signal representative of the efficiency of the tested filtration means 11a, 11b upon the detection of such a presence.

In particular, the signal can be provided directly to the operator in the cab 1. To do so, the cab 1 comprises communication means, such as for example a screen, a lighting button and/or speaker implemented in said cab and/or on the control board of said cab, the signal activating said communication means.

In relation to figure 5, in the case when the sensor at location 22 has effectively detected the sprayed fluid during the step D, the test provides a consecutive step E for providing to the operator a signal indicating that the filtration means 11a, 11b is no longer efficient and should be replaced. Otherwise, the test provides a consecutive step for providing a signal indicating that the filtration means 11a, 11b is still efficient, so that the machine can still be used for spreading without any threat for the health of the operator.

## Claims

1. Process of operating the air conditioning system (5) of a cab (1) of a vehicle, the cab (1) being equipped with a reservoir (23) of windshield washer fluid, said air-conditioning system (5) comprising:
- a circuit (9) for supplying said cab (1) with air coming at least partially from the exterior of said cab (1);
- a blowing device (10) for blowing an air flow inside said circuit (9);
- filtration means (11a, 11b) for removing pollutants from the air blown into the cab (1) through said circuit (9);
- a spraying device (24) operable to spray a quantity of the windshield washer fluid from said reservoir (23) upstream of the filtration means (11a, 11b),
said process comprising:
- a regular air conditioning procedure wherein the air-conditioning system (5) is operated to blow the air supplied by said circuit (9) into the cab (1),
said process being **characterized in that** it comprises a test of the efficiency of the filtration means (11a, 11b), wherein said test provides for:
- operating the spraying device (24) for spraying said quantity of the windshield washer fluid from said reservoir (23) into the circuit (9) upstream of the filtration means (11a, 11b) whilst the blowing device (10) is operated to blow an air flow inside the circuit (9);
- monitoring the air flow supplied by the circuit (9) at a location (22) downstream of the filtration means (11a, 11b) for detection of the possible presence of the sprayed windshield washer fluid by means of at least one appropriate sensor provided at said downstream location; and
- providing by means of said at least one sensor a signal representative of the efficiency of said filtration means upon the detection of such a presence.

2. Process according to claim 1, **characterized in that** the test is performed upon manual activation of an appropriate means by an operator in the cab (1).

3. Process according to claim 1 or 2, **characterized in that** the test is performed automatically upon activation of an appropriate means for selecting a filtration means (11a, 11b).

4. Process according to any of claims 1 to 3, **characterized in that** the regular procedure provides for automatically performing the test within said regular procedure after a predetermined time interval or at a predetermined time.

5. Process according to claim 1, **characterized in that** the reservoir (23) of windshield washer fluid is equipped with a pump, the test providing for operating said pump to feed a spraying device (24) disposed upstream of the filtration means (11a, 11b).

6. Process according to any of claims 1 to 5, **characterized in that** the cab (1) comprises communication means, the signal representative of the efficiency of the filtration means (11a, 11b) activating said communication means.

7. Process according to any of claims 1 to 6, **characterized in that** the filtration means (11a, 11b) are adapted to remove pollutants in accordance with the requirements of at least the category 2 defined by standard EN-15695.

8. Process according to claim 7, **characterized in that** the filtration means (11a, 11b) are adapted to remove pollutants in accordance with the requirements of the category 4 defined by standard EN-15695.

9. Process according to any of claims 1 to 8, **characterized in that** the regular procedure provides for operating the air-conditioning system (5) so that the air flow (F_{R}, F_{E}) supplied in the cab (1) has a flow rate of at least 30 m³/h with an overpressure in the cab (1) of at least 20 Pa.

10. Process according to any of claims 1 to 9, **characterized in that** the detection of the possible presence of sprayed windshield washer fluid is performed at a location (22) within the cab (1).

11. Vehicle, in particular an agricultural machine, comprising a cab (1) equipped with an air-conditioning system (5) which is configured to be operated by a process according to any of claims 1 to 10, the cab being equipped with a reservoir (23) of windshield washer fluid, the air-conditioning system (5) being adapted to be operated for spraying a quantity of said fluid from said reservoir (23) during the test.

## Patentansprüche

1. Verfahren zum Betreiben des Klimaanlagensystems (5) einer Kabine (1) eines Fahrzeugs, wobei die Kabine (1) mit einem Behälter (23) an Windschutzscheiben-Waschflüssigkeit ausgestattet ist, wobei das Klimaanlagensystem (5) aufweist:
- eine Leitung (9) zur Versorgung der Kabine (1) mit Luft, die zumindest teilweise von außerhalb der Kabine (1) kommt;
- eine Gebläseeinrichtung (10) zum Blasen eines Luftstroms in die Leitung (9);
- eine Filtereinrichtung (11a, 11b) zum Entfernen von Verunreinigungen aus der durch die Leitung (9) in die Kabine (1) geblasenen Luft;
- eine Sprüheinrichtung (24), die betreibbar ist zum Sprühen einer Menge an Windschutzscheiben-Waschflüssigkeit aus dem Behälter (23) stromauf der Filtereinrichtung (11a, 11b),
wobei das Verfahren aufweist:
- einen regulären Luftaufbereitungsvorgang, wobei das Klimaanlagensystem (5) betrieben wird, um die von der Leitung (9) zugeführte Luft in die Kabine (1) zu blasen,
wobei das Verfahren **dadurch gekennzeichnet ist, dass** es einen Wirksamkeitstest der Filtereinrichtung (11a, 11b) umfasst, wobei der Test folgendes vorsieht:
- Betreiben der Sprüheinrichtung (24) zum Sprühen der Menge an Windschutzscheiben-Waschflüssigkeit aus dem Behälter (23) in die Leitung (9) stromauf der Filtereinrichtung (11a, 11b), während die Gebläseeinrichtung (10) betrieben wird, um einen Luftstrom in die Leitung (9) zu blasen;
- Überwachen des durch die Leitung (9) zugeführten Luftstroms an einem Ort (22) stromab der Filtereinrichtung (11a, 11b) zum Erfassen des möglichen Vorhandenseins der gesprühten Windschutzscheiben-Waschflüssigkeit mittels mindestens eines geeigneten Sensors, der an dem Ort stromab vorgesehen ist; und
- Bereitstellen eines Signals mittels des mindestens einen Sensors, das die Wirksamkeit der Filtereinrichtung bei Erfassung eines solchen Vorhandenseins angibt.

2. Verfahren nach Anspruch 1, **dadurch gekennzeichnet, dass** der Test nach manueller Aktivierung eines geeigneten Mittels durch eine Bedienperson in der Kabine (1) durchgeführt wird.

3. Verfahren nach Anspruch 1 oder 2, **dadurch gekennzeichnet, dass** der Test automatisch bei Aktivierung eines geeigneten Mittels zum Auswählen einer Filtereinrichtung (11a, 11b) durchgeführt wird.

4. Verfahren nach einem der Ansprüche 1 bis 3, **dadurch gekennzeichnet, dass** das reguläre Verfahren für eine automatische Durchführung des Tests innerhalb des regulären Verfahrens nach einer vorbestimmten Zeitdauer oder zu einer vorbestimmten Zeit sorgt.

5. Verfahren nach Anspruch 1, **dadurch gekennzeichnet, dass** der Behälter (23) an Windschutzscheiben-Waschflüssigkeit mit einer Pumpe ausgestattet ist, wobei der Test vorsieht, dass die Pumpe betrieben wird, um eine Sprüheinrichtung (24) zu speisen, die stromauf der Filtereinrichtung (11a, 11b) angeordnet ist.

6. Verfahren nach einem der Ansprüche 1 bis 5, **dadurch gekennzeichnet, dass** die Kabine (1) eine Kommunikationseinrichtung aufweist, wobei das Signal, dass die Wirksamkeit der Filtereinrichtung (11a, 11b) angibt, die Kommunikationseinrichtung aktiviert.

7. Verfahren nach einem der Ansprüche 1 bis 6, **dadurch gekennzeichnet, dass** die Filtereinrichtung (11a, 11b) dazu eingerichtet ist, Verunreinigungen gemäß den Vorgaben von mindestens der Kategorie 2 zu entfernen, die durch die Norm EN-15695 definiert ist.

8. Verfahren nach Anspruch 7, **dadurch gekennzeichnet, dass** die Filtereinrichtung (11a, 11b) dazu eingerichtet ist, Verunreinigungen gemäß den Anforderungen der Kategorie 4 zu entfernen, die durch die Norm EN-15695 definiert ist.

9. Verfahren nach einem der Ansprüche 1 bis 8, **dadurch gekennzeichnet, dass** das reguläre Verfahren für ein Betreiben des Klimaanlagensystems (5) sorgt, so dass der in die Kabine (1) zugeführte Luftstrom (F_{R}, F_{E}) eine Strömungsrate von mindestens 30 m3/h mit einem Überdruck in der Kabine (1) von mindestens 20 Pa aufweist.

10. Verfahren nach einem der Ansprüche 1 bis 9, **dadurch gekennzeichnet, dass** die Erfassung des möglichen Vorhandenseins von gesprühter Windschutzscheiben-Waschflüssigkeit an einem Ort (22) innerhalb der Kabine (1) durchgeführt wird.

11. Fahrzeug, insbesondere landwirtschaftliche Maschine, mit einer Kabine (1), die mit einem Klimaanlagensystem (5) ausgestattet ist, das dazu eingerichtet ist, durch ein Verfahren gemäß einem der Ansprüche 1 bis 10 betrieben zu werden, wobei die Kabine mit einem Behälter (23) an Windschutzscheiben-Waschflüssigkeit ausgestattet ist, wobei das Klimaanlagensystem (5) dazu eingerichtet ist, zum Sprühen einer Menge an Waschflüssigkeit aus dem Behälter (23) während des Tests betrieben zu werden.

## Revendications

1. Procédé d'exploitation de système de climatisation (5) de cabine (1) de véhicule, la cabine (1) étant équipée d'un réservoir (23) de liquide lave-glace, ledit système de climatisation (5) comprenant:
- un circuit (9) permettant d'alimenter ladite cabine (1) en air provenant au moins partiellement de l'extérieur de ladite cabine (1);
- un dispositif de soufflage (10) permettant de souffler un flux d'air dans ledit circuit (9);
- des moyens de filtration (11a, 11b) permettant d'éliminer des polluants de l'air soufflé dans la cabine (1) via ledit circuit (9);
- un dispositif de pulvérisation (24) utilisé pour vaporiser une quantité du liquide lave-glace dudit réservoir (23) en amont du moyen de filtration (11a, 11b),
ledit procédé comprenant:
- une procédure de climatisation ordinaire dans laquelle le système de climatisation (5) est utilisé pour souffler l'air fourni par ledit circuit (9) dans la cabine (1),
ledit procédé étant **caractérisé en ce qu'**il comprend un test de l'efficacité des moyens de filtration (11a, 11b), où ledit test prévoit:
- l'exploitation du dispositif de pulvérisation (24) pour vaporiser ladite quantité du liquide lave-glace dudit réservoir (23) dans le circuit (9) en amont des moyens de filtration (11a, 11b) pendant que le dispositif de soufflage (10) est utilisé pour souffler un flux d'air dans le circuit (9);
- le suivi du flux d'air fourni par le circuit (9) à un endroit (22) en aval des moyens de filtration (11a, 11b) afin de détecter l'éventuelle présence du liquide lave-glace vaporisé par le biais d'au moins un capteur approprié prévu au niveau dudit endroit en aval ; et
- la fourniture, par le biais dudit au moins un capteur, d'un signal représentatif de l'efficacité desdits moyens de filtration lors de la détection d'une telle présence.

2. Procédé selon la revendication 1, **caractérisé en ce que** le test est effectué lors de l'activation manuelle d'un moyen approprié par l'opérateur dans la cabine (1).

3. Procédé selon la revendication 1 ou 2, **caractérisé en ce que** le test est effectué automatiquement lors de l'activation d'un moyen approprié en vue de la sélection d'un moyen de filtration (11a, 11b).

4. Procédé selon l'une quelconque des revendications 1 à 3, **caractérisé en ce que** la procédure ordinaire prévoit l'exécution automatique du test dans ladite procédure ordinaire après une intervalle de temps prédéfinie ou à un moment prédéfini.

5. Procédé selon la revendication 1, **caractérisé en ce que** le réservoir (23) de liquide lave-glace est équipé d'une pompe, le test prévoyant l'exploitation de ladite pompe afin d'alimenter un dispositif de pulvérisation (24) placé en amont des moyens de filtration (11a, 11b).

6. Procédé selon l'une quelconque des revendications 1 à 5, **caractérisé en ce que** la cabine (1) comprend des moyens de communication, le signal représentatif de l'efficacité des moyens de filtration (11a, 11b) activant lesdits moyens de communication.

7. Procédé selon l'une quelconque des revendications 1 à 6, **caractérisé en ce que** les moyens de filtration (11a, 11b) sont adaptés à éliminer des polluants en fonction des exigences d'au moins la catégorie 2 définie par la norme EN-15695.

8. Procédé selon la revendication 7, **caractérisé en ce que** les organes de filtration (11a, 11b) sont adaptés à éliminer des polluants en fonction des exigences de la catégorie 4 définie par la norme EN-15695.

9. Procédé selon l'une quelconque des revendications 1 à 8, **caractérisé en ce que** la procédure ordinaire prévoit une exploitation du système de climatisation (5) telle que le flux d'air (F_{R}, F_{E}) fourni dans la cabine (1) ait un débit d'au moins 30 m²/h à une surpression dans la cabine (1) d'au moins 20 Pa.

10. Procédé selon l'une quelconque des revendications 1 à 9, **caractérisé en ce que** la détection de l'éventuelle présence de liquide lave-glace vaporisé est effectuée à un endroit (22) à l'intérieur de la cabine (1).

11. Véhicule, en particulier un engin agricole, comprenant une cabine (1) équipée d'un système de climatisation (5) configuré pour être activé par un procédé selon l'une quelconque des revendications 1 à 10, la cabine étant équipée d'un réservoir (23) de liquide lave-glace, le système de climatisation (5) étant adapté à être utilisé pour vaporiser une quantité dudit liquide provenant dudit réservoir (23) pendant le test.
